# FASCICULE DE BREVET EUROPEEN

(11) **EP 0 803 581 B1**
(45) Date de publication et mention de la délivrance du brevet: **20.06.2001**
(21) Numéro de dépôt: 97400802.1
(22) Date de dépôt: 08.04.1997
(51) Int. Cl.: C21D 1/76

(54) **Procédé d'élaboration d'une atmosphère de traitement thermique et méthode de régulation d'un tel procédé**
Verfahren zum Herstellen einer Wärmebehandlungsatmosphäre sowie dessen Regelungsverfahren
Process for producing a heat treatment atmosphere and method for controlling this process

(30) Priorité: 23.04.1996 FR 9605105
(43) Date de publication de la demande: 29.10.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Morin, Jean-Claude, 79201 Parthenay Cedex (FR); Pourtalet McSweeney, Pascale, 78350 Les Loges En Josas (FR); Poynot, Philippe, 91190 Gif Sur Yvette (FR)
(74) Mandataire: Vesin, Jacques

(56) Documents cités:
- EP-A- 0 482 992
- WO-A-93/21350
- FR-A- 2 595 801
- FR-A- 2 628 752
- FR-A- 2 628 753
- PATENT ABSTRACTS OF JAPAN vol. 011, no. 176 (C-426), 5 Juin 1987 & JP 62 004439 A (NGK INSULATORS LTD), 10 Janvier 1987,

## Description

La présente invention concerne le domaine des atmosphères de traitement thermique. Elle concerne plus particulièrement les atmosphères élaborées par la réaction, dans un réacteur catalytique de désoxygénation d'un gaz, entre un premier mélange comportant de l'oxygène et un second mélange comportant un hydrocarbure.

Le « premier mélange » est couramment constitué d'un mélange d'air et d'azote cryogénique, ou encore d'un azote impur comportant une concentration résiduelle d'oxygène tel que produit sur site par séparation d'air par perméation ou adsorption.

Le « second mélange » est, quant à lui, le plus couramment constitué de gaz naturel ou encore de propane, ou encore d'un mélange d'hydrocarbures.

En pratique, le fonctionnement de ces générateurs s'avère très délicat à contrôler lorsque les besoins du site en termes de débit d'atmosphère varient. Une telle difficulté peut se poser tant dans un cas (a) où le générateur alimente plusieurs fours dans un atelier, que dans le cas (b) où il alimente un seul four :
- cas a) : dans le cas de l'alimentation d'un site multifours, il est courant qu'à un moment de la journée ou de la semaine de production, un (ou plusieurs) des fours soit arrêté. Un tel arrêt peut se faire de façon classique, manuellement par une vanne située sur la ligne alimentant le four, où encore par exemple au niveau du générateur même d'atmosphère qui vient alors piloter la fermeture d'une électrovanne sur la ligne considérée.

On va alors, par un quelconque moyen, signaler au générateur d'atmosphère qu'il doit produire moins de débit (soustraction faite de la consommation du four qui vient d'être arrêté), et assister au fait que le générateur va délivrer un débit global réduit en conséquence.

Le débit produit va donc être diminué alors que la pression en sortie du réacteur catalytique aura changé, la fermeture d'un four augmentant la perte de charge en sortie du réacteur.

Il faut en effet considérer le fait que chaque ligne possède sa perte de charge propre (due à la longueur de la ligne, ou encore à la présence de dispositifs tels que vannes ou autre débitmètres sur la ligne etc.), et donc le débit tel que nouvellement réglé par le générateur pour s'adapter au nombre de fours maintenant en service va se repartir plus ou moins entre les lignes ouvertes selon la perte de charge de chaque ligne. On ne peut donc en pratique être certain de la répartition du débit entre chaque ligne, donc au niveau de chaque four, et il est alors courant qu'un opérateur soit contraint de réajuster manuellement le débit alimentant chaque four afin de se situer au niveau du débit effectivement requis par le four considéré.
- cas b) : pour illustrer le cas d'un unique four alimenté par le générateur, dont les besoins en débits de gaz peuvent varier, on peut citer le cas d'un four cloche.

Ces fours cloches mettent en oeuvre des profils de température de quelques heures voire quelques dizaines d'heures, comportant typiquement une montée en température plus ou moins régulière, un plateau de température, et une phase de refroidissement. Durant le plateau thermique, l'utilisateur met le plus souvent en oeuvre un débit décroissant, en général par paliers.

L'utilisateur maintient par ailleurs le plus souvent dans son four cloche une certaine surpression (typiquement de l'ordre de quelques dizaines de millibars), ayant pour objectif de limiter les entrées d'air dans la cloche. Le maintien en toutes circonstances de cette surpression, dans de telles conditions de variation de débit, s'avère alors tout particulièrement délicat, et est le plus souvent réalisé de façon manuelle, voire via l'intervention d'une soupape.

Un des objectifs de la présente invention est alors de proposer un procédé amélioré de génération d'atmosphère, du type précédemment défini, permettant de réguler précisément la quantité d'atmosphère injectée dans chaque four, par exemple quel que soit le nombre de fours en service du site utilisateur.

Le procédé d'élaboration d'une atmosphère de traitement thermique selon l'invention, par réaction catalytique entre un premier mélange gazeux comportant de l'oxygène et un second mélange gazeux comportant un hydrocarbure, dans un réacteur catalytique, en vue de l'alimentation en atmosphère d'un site utilisateur comportant au moins un four de traitement thermique, comporte alors les étapes suivantes :
a) on mesure en continu la pression de l'atmosphère de traitement thermique obtenue en sortie du réacteur catalytique ;
b) on compare la mesure de pression effectuée durant l'étape a) avec une pression de consigne P_{c} ;
c) on rétroagit, selon le résultat de la comparaison effectuée durant l'étape b), le cas échéant, sur les débits respectifs de premier mélange gazeux et/ou de second mélange gazeux parvenant à l'entrée du réacteur catalytique, de façon à ramener la pression de l'atmosphère de traitement thermique résultante en sortie du réacteur au niveau de la consigne P_{c}.

Les travaux qu'a menés à bien la Demanderesse ont en effet mis en évidence le fait que la gestion d'une consigne de pression en sortie du réacteur catalytique apporte une solution aux problèmes que posent tant les installations multifours que les installations où un seul four de traitement thermique est alimenté.

Illustrons ici l'exemple d'une installation comportant trois fours continus de traitement thermique. A un moment donné, l'utilisateur arrête le four N° 3. Cette intervention fait monter la pression en sortie de réacteur catalytique, du fait de la perte de charge introduite par la fermeture de la ligne d'alimentation N° 3.

Selon l'invention, on va modifier les débits de premier et second mélanges gazeux alimentant le réacteur catalytique, pour obtenir en sortie une atmosphère de traitement thermique dont la pression soit ramenée au niveau de la consigne P_{c}

La pression étant rétablie au niveau de la pression de consigne, la perte de charge étant, par ailleurs, comme déjà signalé, fixée dans chaque ligne, une telle opération fixe le débit envoyé dans chaque ligne en service de l'installation au niveau de débit que nécessite chaque four habituellement (donc sans aucune perturbation de son fonctionnement).

La consigne de pression P_{c} en sortie de réacteur est fixée au cas par cas pour chaque site utilisateur, en fonction du débit maximum que nécessite le site considéré, et de la perte de charge qui caractérise le réseau.

La consigne P_{c} est le plus couramment située dans l'intervalle [50mbar, 400 mbar] relatifs.

Un tel cas d'alimentation en parallèle d'un site utilisateur de trois fours sera détaillé plus loin dans le cadre d'exemples.

Le premier mélange gazeux selon l'invention pourra par exemple être constitué d'un azote impur comportant une certaine concentration résiduelle d'oxygène, telle qu'obtenu par séparation d'air par perméation ou adsorption, ou encore être obtenu par un mélange d'air et d'azote d'origine cryogénique.

Toujours à titre illustratif, le second mélange gazeux qui comporte un hydrocarbure pourra être constitué de gaz naturel ou encore d'un mélange d'hydrocarbures, mais il pourra également être un mélange plus complexe constitué d'un sous produit industriel en provenance d'un site industriel dont un des procédés conduit à la production d'un tel sous produit, et qui comporte alors préférentiellement une forte proportion (typiquement au moins 50% du mélange global) du mélange constitué d'hydrogène, d'un hydrocarbure, et de CO.

Le réacteur catalytique selon l'invention pourra, par exemple, comporter un catalyseur à base de métal non noble tel que le nickel ou le cuivre, ou encore à base d'un métal précieux tel que le platine ou le palladium.

Selon une des mises en oeuvre de l'invention, le réacteur catalytique utilisé met en oeuvre un catalyseur à base de métal précieux tel le palladium ou le platine, la réaction entre le premier mélange et le second mélange gazeux étant effectuée à l'intérieur du réacteur dans une gamme de température allant de 400 à 900°C.

Selon une autre des mises en oeuvre de l'invention, le réacteur catalytique utilisé met en oeuvre un catalyseur à base de métal non précieux, tel que le nickel, la réaction entre le premier mélange et le second mélange gazeux étant effectuée à l'intérieur du réacteur à une température comprise entre 800 et 1200 °C.

Les moyens utilisés pour effectuer le suivi de la pression mesurée en sortie de réacteur, et la comparaison entre la pression mesurée en sortie de réacteur et la pression de consigne Pc, mais également pour la rétroaction sur les débits entrant dans le réacteur afin de maintenir le niveau de pression Pc pourront comporter tout type d'unité de traitement d'informations, comportant des moyens de régulation du fonctionnement de moyens de commande par exemple de débit (vannes, électrovannes etc..), l'unité recevant donc notamment une information de pression mesurée en sortie de réacteur catalytique.

Différents modes de réalisation de ces moyens de régulation peuvent être envisagés, comme par exemple un régulateur PID ou tout autre régulateur connu de l'état de la technique.

Les opérations précédemment évoquées de suivi, comparaison et rétroaction pouvant se présenter par exemple sous une forme programmée dans l'unité de traitement d'informations, celle-ci comporte alors tout calculateur programmable approprié connu de l'état de la technique.

A titre illustratif, l'unité pourra par exemple comporter un automate programmable.

La notion de contrôle « en continu » de la pression en sortie de réacteur devra s'entendre comme liée à la vitesse d'acquisition des moyens utilisés, par exemple d'un l'automate programmable, le rafraîchissement des données étant en général effectué toutes les fractions de seconde.

Selon un des aspects de l'invention, on asservit la température de chauffage du réacteur catalytique au débit d'atmosphère à produire. On pourra par exemple effectuer un tel asservissement en définissant un certain nombre de plages de débit d'atmosphère que le réacteur est amené à produire pour alimenter le site utilisateur selon toutes ses variantes de fonctionnement, en associant à chaque plage une consigne de température de chauffage du réacteur catalytique.

Le procédé selon l'invention peut élaborer des atmosphères de traitement thermique de composition très variée, notamment selon les besoins du site utilisateur considéré et la concentration résiduelle d'oxygène de départ du premier mélange gazeux, se composant d'une base d'azote, à laquelle s'ajoute notamment de l'hydrogène (préférentiellement de 1 à 30 % volumique), du CO (préférentiellement de 0,5 à 15 % volumique), du CO₂ (préférentiellement de 100 ppm à 2 % volumique) et de la vapeur d'eau (pour un point de rosée se situant préférentiellement entre -40°C et +20°C, voire +30°C), s'adaptant en cela aux types de traitement thermiques visés nécessitant une atmosphère de protection ou bien une atmosphère plus active par exemple décarburante.

Afin d'assurer l'absence substantielle d'oxygène dans l'atmosphère résultante, on fonctionnera préférentiellement en légère sur-stoechiométrie en hydrocarbure, entraînant la présence d'hydrocarbure résiduel dans l'atmosphère résultante.

On ne détaillera pas ici les calculs qui sont traditionnellement effectués par l'homme du métier pour déterminer, en considérant la stoechiométrie des réactions se produisant entre l'oxygène et l'hydrocarbure, et pour des caractéristiques données d'atmosphère à élaborer (débit et composition, par exemple en CO et H₂), la concentration résiduelle d'oxygène au moins nécessaire dans la source de premier mélange gazeux, le débit de ce premier mélange gazeux à mettre en oeuvre, et le débit de second mélange gazeux comprenant l'hydrocarbure pour se situer au moins dans les conditions stoechiométriques voire dans des conditions légèrement sur-stoechiométrique.

Lorsqu'un niveau de pression P d'atmosphère en sortie du réacteur est relevé et transmis à l'unité de traitement d'information, celle-ci compare P avec la consigne P_{c}, et régule la pression afin que P soit ramenée au niveau de la valeur de consigne P_{c}.

Cette régulation se fait en modifiant le débit global d'atmosphère produit, l'écart entre P et P_{c} se traduisant donc en consigne de débit global d'atmosphère, ce qui ramène ensuite aux calculs débits/concentrations ci-dessus évoqués.

A titre illustratif, on pourra par exemple effectuer la régulation de la façon suivante, à partir d'un automate programmable :
- l'automate reçoit une mesure de pression P, relevée en sortie du réacteur catalytique;
- l'automate effectue une mise en forme numérique N de cette mesure (comprise entre 0 et Nₘₐₓ) ;
- cette forme numérique N est envoyée dans un bloc de régulation PID qui effectue une régulation et émet en sa sortie une valeur N' représentant le résultat de la régulation (le régulateur travail par exemple en sortie inversée : plus la mesure de pression est élevée et plus la valeur numérique tend vers le bas);
- l'automate converti alors l'écart de pression P-P_{c} en consigne de débit Q_{c} par une règle de trois : 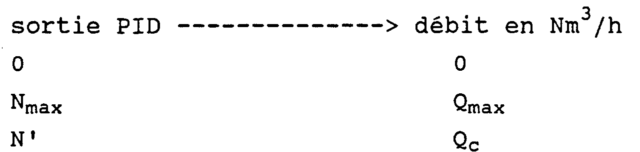
   avec Q_{c} = (Qmax x N') / Nmax
   où Qₘₐₓ est égal à la valeur de débit maximum que peut produire l'installation (i.e. la pleine échelle de débit);
- l'automate traduisant alors cette consigne de débit global Q_{c} en consignes de débits Q_{N2-O2} de premier mélange gazeux comportant l'oxygène et Q_{CxHy} de second mélange gazeux comportant l'hydrocarbure.

Quelle que soit la méthode utilisée, on procédera avantageusement, à partir d'une consigne de débit Q_{c} et de la composition de l'atmosphère requise, selon la chronologie suivante :
- calcul de la consigne Q_{N2-O2} de débit de premier mélange gazeux comportant l'oxygène;
- calcul, à partir de Q_{N2-O2}, de la consigne Q_{CxHy} de débit de second mélange gazeux comportant l'hydrocarbure (préférentiellement en appliquant par rapport à la consigne C_{N2-O2} une légère surstoechiométrie).

On remarquera que cette chronologie présente l'avantage de calculer la consigne de débit d'hydrocarbure à partir du débit réel de premier mélange gazeux (par exemple d'azote impur) et non à partir de la consigne de débit global d'atmosphère, ce qui évite sensiblement le risque de formation de suies (calculer au démarrage de la régulation la consigne de débit d'hydrocarbure à partir de la consigne de débit global d'atmosphère conduit à un risque de mise en oeuvre d'un excès non contrôlé d'hydrocarbure par rapport à l'oxygène et donc à l'apparition possible de suies).

L'invention concerne également une méthode de régulation d'un procédé d'élaboration d'une atmosphère de traitement thermique, au cours duquel on fait réagir, dans un réacteur catalytique de désoxygénation d'un gaz, un premier mélange gazeux comportant de l'oxygène et un second mélange gazeux comportant un hydrocarbure, afin d'obtenir en sortie de réacteur l'atmosphère de traitement thermique recherchée, en vue de l'alimentation d'un site utilisateur comportant au moins un four utilisateur, selon laquelle :
a) on mesure en continu la pression de l'atmosphère de traitement thermique obtenue en sortie du réacteur catalytique ;
b) on compare la mesure de pression effectuée durant l'étape a) avec une pression de consigne déterminée P_{c} ;
c) on rétroagit, selon le résultat de la comparaison effectuée durant l'étape b), le cas échéant, sur les débits respectifs de premier et/ou de second mélange gazeux parvenant au réacteur catalytique, de façon à rétablir la pression de l'atmosphère de traitement thermique en sortie du réacteur au niveau de la consigne P_{c}.

L'invention concerne aussi une installation d'élaboration d'une atmosphère de traitement thermique comportant :
- une source d'un premier mélange gazeux comportant de l'oxygène ;
- une source d'un second mélange gazeux comportant un hydrocarbure ;
- un réacteur catalytique de désoxygénation d'un gaz, apte à produire en sa sortie l'atmosphère de traitement thermique, telle que résultant de la réaction au sein du réacteur entre le premier mélange gazeux et le second mélange gazeux,
se caractérisant en ce qu'elle comporte :
a) des premiers moyens de mesure en continu de la pression de l'atmosphère en sortie du réacteur ;
b) des seconds moyens permettant d'effectuer le suivi de la mesure réalisée par les premiers moyens et de comparer le résultat de cette mesure avec une pression de consigne P_{c} ;
c) des troisièmes moyens permettant, le cas échéant, selon le résultat de la comparaison effectuée durant l'étape b), de modifier les débits respectifs de premier mélange gazeux et/ou second mélange gazeux parvenant au réacteur catalytique afin de ramener la pression au niveau de la pression de consigne Pc.

Selon une des mises en oeuvre de l'invention, les second et troisièmes moyens sont rassemblés dans une unité de traitement d'informations, comportant des moyens de régulation du fonctionnement de moyens de commande de débits, et un calculateur programmable.

Selon une des mises en oeuvre de l'invention, les moyens de régulation comportent un régulateur PID.

D'autres caractéristiques et avantages de la présente invention ressortiront de la description suivante de modes de réalisation donnée à titre illustratif mais nullement limitatif faite en relation avec les dessins annexés pour lesquels:

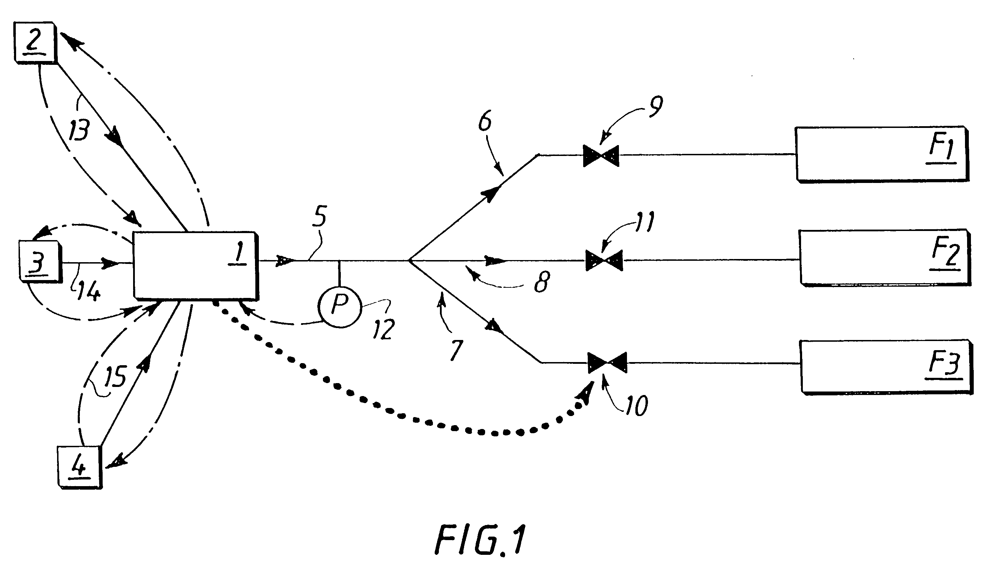

- la figure 1 est une représentation schématique d'une installation convenant pour la mise en oeuvre du procédé de génération d'atmosphère selon l'invention;
- la figure 2 est une représentation schématique plus détaillée du générateur catalytique 1 de la figure 1.

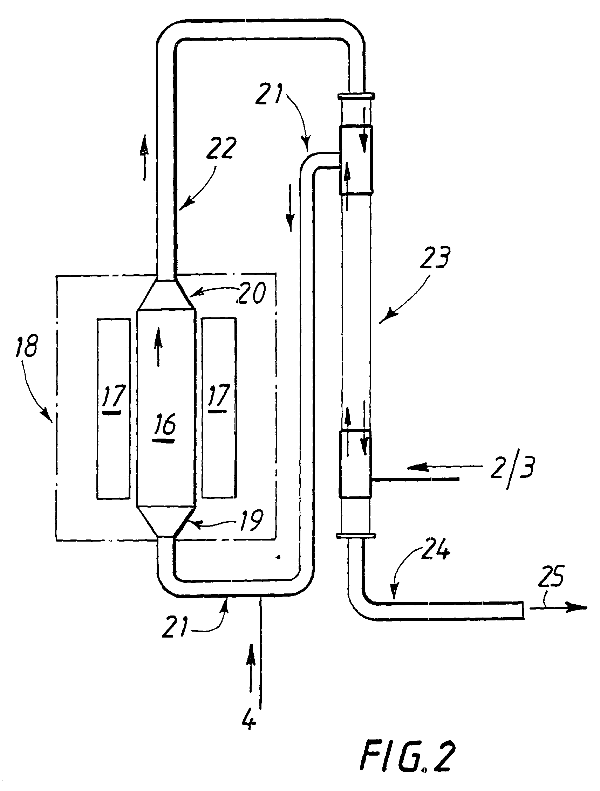

La boite référencée 1 sur la figure représente schématiquement le générateur d'atmosphère, comportant ici, comme détaillé plus loin dans le cadre de la figure 2, un réacteur catalytique à base de platine sur support d'alumine, un échangeur gaz/gaz, ainsi qu'une unité de traitement d'information comportant un automate programmable.

Le réacteur est alimenté à l'aide d'un premier mélange gazeux qui comporte de l'oxygène, obtenu ici par un mélange entre de l'air (source 2) et de l'azote d'origine cryogénique (source 3), et d'un second mélange gazeux comportant un hydrocarbure constitué ici (source 4) de gaz naturel.

Le premier mélange gazeux selon l'invention pourrait également par exemple être constitué d'un azote impur obtenu par perméation ou adsorption.

L'atmosphère de traitement thermique résultant de la réaction de ces mélanges à l'intérieur du réacteur est délivrée, via la ligne de gaz 5, dans un faisceau de lignes de gaz en parallèle (6, 7, 8), alimentant en bout de ligne trois fours de traitement thermique notés sur la figure F1, F2 et F3.

Chacune des lignes est équipée d'un moyen de création d'une perte de charge dans la ligne (respectivement 9, 10, et 11), qui peut, par exemple, être constitué par les moyens suivants : une vanne de laminage, ou une vanne d'arrêt que l'utilisateur utilise pour laminer le débit parvenant dans la ligne, ou encore un tableau de gaz. Mais de façon plus générale, ce moyen de création d'une perte de charge peut également être obtenu par la configuration de tuyauterie utilisée dans chaque ligne, ou encore par la configuration des buses d'injection de l'atmosphère dans chaque four.

Un moyen (12) de mesure de la pression de l'atmosphère délivrée par le générateur est disposé sur la ligne de gaz 5, entre le générateur 1 et la dérivation de lignes 6, 7, 8.

On a symbolisé sur la figure :
- en traits tiretés (---) des exemples de flux d'informations reçus par l'unité de traitement d'informations du générateur 1 (incluant donc notamment une information de pression en provenance du capteur de pression 12),
- en traits mixtes tiretés/pointillés (-.-.-.), des exemples de rétroaction de l'unité sur les sources de gaz alimentant le réacteur catalytique, et
- en traits purement pointillés (...), un exemple d'action de l'unité sur une des lignes du réseau, pour fermer cette ligne, suite par exemple à une action volontariste de l'utilisateur au niveau du générateur 1 (par exemple, par l'action sur un push bouton).

La configuration représentée dans le cadre de cette figure n'est qu'illustrative des nombreuses possibilités de flux d'informations et d'actions vers et en provenance de l'unité de traitement d'informations, on peut encore citer toujours à titre illustratif les cas suivants :
i) flux d'informations vers l'unité :
   - une mesure de température à l'intérieur du réacteur (permettant par exemple de définir un seuil au delà duquel l'injection du mélange réactionnel est autorisée ou encore un seuil de sécurité au delà duquel l'installation est arrêtée) ;
   - une mesure de pression à l'entrée du réacteur catalytique;
   - une mesure de pression sur le réseau de premier mélange gazeux (par exemple sur le réseau d'azote impur);
   - une mesure de pression sur le réseau d'azote cryogénique quand une telle source est utilisée;
   - des informations diverses et variées en provenance des fours (température, composition de l'atmosphère à l'intérieur du four...).
ii) flux d'actions en provenance de l'unité :
   - le réglage de la température de chauffe des résistances entourant le réacteur (on a signalé que selon un des aspects de l'invention, on pouvait asservir cette température au débit d'atmosphère produit);
   - des rétroactions liés à des aspects sécuritaires de l'installation (surchauffe, défaut de l'un ou l'autre des fluides nécessitant par exemple de basculer sur une autre source...).

Sur la figure 2, qui illustre de façon schématique et partielle un mode de réalisation du générateur catalytique 1, le mélange gazeux 2/3 qui comporte de l'oxygène est, après avoir transité dans une des voies d'un échangeur à plaques 23, dirigé, via une canalisation 21, vers le point bas 19 d'un réacteur catalytique 16. On adjoint à ce premier mélange gazeux, avant son arrivée dans le réacteur catalytique, le second mélange gazeux 4 qui comporte un hydrocarbure.

L'atmosphère de traitement thermique résultant de la réaction entre les deux mélanges à l'intérieur du réacteur 16 est évacuée, via le point haut 20 du réacteur catalytique, par une ligne de gaz 22, connectée à une autre voie de l'échangeur 23, d'où elle ressort par une conduite 24 pour être dirigée vers le (ou les) poste utilisateur 25, F1, F2....

On a symbolisé par la référence 17 les résistances chauffantes entourant le réacteur catalytique, et par le rectangle 18 une isolation thermique entourant le réacteur.

Par souci de simplicité de lecture de la figure, on n'a pas fait figurer sur cette figure 2 le détail de l'unité de traitement d'informations ou encore les systèmes de mesure de pression et autre de moyens de commande de débits desquels l'unité (par exemple l'automate) récupère des informations ou encore sur lesquels il exerce des actions.

## Revendications

1. Procédé d'élaboration d'une atmosphère de traitement thermique par réaction catalytique entre un premier mélange gazeux (2/3) comportant de l'oxygène et un second mélange gazeux (4) comportant un hydrocarbure, dans un réacteur catalytique (16), en vue de l'alimentation en ladite atmosphère d'un site utilisateur comportant au moins un poste utilisateur (F1, F2, F3, 25), selon lequel :
a) on mesure en continu (12) la pression de l'atmosphère de traitement thermique obtenue en sortie du réacteur ;
b) on compare la mesure de pression effectuée durant l'étape a) avec une pression de consigne P_{c} déterminée, en sortie de réacteur, en fonction du débit maximum que nécessite le site considéré et de la perte de charge qui caractérise le réseau ;
c) on rétroagit, le cas échéant, selon le résultat de la comparaison effectuée durant l'étape b), sur les débits respectifs de premier mélange et/ou de second mélange gazeux parvenant à l'entrée du réacteur catalytique, de façon à ramener si nécessaire la pression de l'atmosphère de traitement thermique en sortie du réacteur au niveau de la consigne P_{c}.

2. Procédé selon la revendication 1, caractérisé en ce que l'on met en oeuvre dans le réacteur un catalyseur à base de métal précieux, et en ce que l'on effectue la réaction à une température comprise entre 400°C et 900°C.

3. Procédé selon la revendication 1, caractérisé en ce que l'on met en oeuvre dans le réacteur un catalyseur à base de métal non précieux, et en ce que l'on effectue la réaction à une température comprise entre 800°C et 1200°C.

4. Procédé selon la revendication 2 ou 3, caractérisé en ce que l'on asservit la température de chauffage du réacteur au débit d'atmosphère produite.

5. Procédé selon l'une des revendications 1 à 4, caractérisé en ce que ledit premier mélange gazeux est un azote impur produit par séparation d'air par voie membranaire ou par adsorption, dont la concentration résiduelle en oxygène est supérieure ou égale à 0,5%.

6. Procédé selon la revendication 5, caractérisé en ce que la concentration résiduelle en oxygène est comprise entre 2 et 7%.

7. Procédé selon l'une des revendications 1 à 4, caractérisé en ce que ledit premier mélange gazeux est un mélange d'air et d'azote d'origine cryogénique.

8. Procédé selon une des revendications précédentes, caractérisé en ce qu'on réalise une échange thermique entre les deux milieux gazeux suivants :
- ladite atmosphère de traitement thermique, entre sa sortie du réacteur catalytique et son arrivée à un poste utilisateur ;
- ledit premier mélange gazeux comportant de l'oxygène, avant son entrée dans le réacteur catalytique.

9. Méthode de régulation d'un procédé d'élaboration d'une atmosphère de traitement thermique, procédé au cours duquel on fait réagir, dans un réacteur catalytique, un premier mélange gazeux comportant de l'oxygène et un second mélange gazeux comportant un hydrocarbure, afin d'obtenir en sortie du réacteur ladite atmosphère de traitement thermique, en vue de l'alimentation en ladite atmosphère d'un site utilisateur comportant au moins un poste utilisateur, selon laquelle :
a) on mesure en continu la pression P de ladite atmosphère de traitement thermique obtenue en sortie du réacteur catalytique ;
b) on compare la mesure de pression P effectuée durant l'étape a) avec une pression de consigne P_{c} déterminée, en sortie de réacteur, en fonction du débit maximum que nécessite le site considéré et de la perte de charge qui caractérise le réseau ;
c) on rétroagit, le cas échéant, selon le résultat de la comparaison effectuée durant l'étape b), sur les débits respectifs de premier mélange gazeux et/ou de second mélange gazeux parvenant à l'entrée du réacteur catalytique, de façon à ramener, si nécessaire, la pression P au niveau de la pression de consigne P_{c}.

10. Méthode de régulation selon la revendication 9, caractérisée en ce que l'on ramène la pression P au niveau de la valeur de consigne P_{c} en modifiant le débit global d'atmosphère de traitement thermique produit, l'écart entre P et P_{c} étant traduit en une consigne Q_{c} de débit global d'atmosphère, et en ce que l'on procède, à partir des données de consigne de débit global Q_{c} et de composition de l'atmosphère requise, aux étapes suivantes :
- calcul de la consigne Q_{N2-O2} de débit de premier mélange gazeux comportant l'oxygène;
- calcul, sur la base de la consigne Q_{N2-O2}, de la consigne Q_{CxHy} de débit de second mélange gazeux comportant l'hydrocarbure.

11. Installation d'élaboration d'une atmosphère de traitement thermique comportant :
- une source (2/3) d'un premier mélange gazeux comportant de l'oxygène ;
- une source (4) d'un second mélange gazeux comportant un hydrocarbure ;
- un réacteur catalytique (16) de désoxygénation d'un gaz, apte à produire en sa sortie ladite atmosphère de traitement thermique, résultant de la réaction au sein du réacteur entre le premier mélange gazeux et le second mélange gazeux,
caractérisée en ce qu'elle comporte :
a) des premiers moyens (12) de mesure en continu de la pression de l'atmosphère en sortie du réacteur ;
b) des seconds moyens (1) permettant de comparer le résultat de la mesure effectuée durant l'étape a) avec une pression de consigne P_{c} déterminée, en sortie de réacteur, en fonction du débit maximum que nécessite le site considéré et de la perte de charge qui caractérise le réseau ;
c) des troisièmes moyens (1) permettant, selon le résultat de la comparaison effectuée durant l'étape b), de modifier le cas échéant, les débits respectifs de premier mélange gazeux et/ou second mélange gazeux parvenant au réacteur catalytique afin de ramener ladite pression au niveau de la pression de consigne Pc.

12. Installation selon la revendication 11, caractérisée en ce les second et troisièmes moyens sont rassemblés dans une unité de traitement d'informations, comportant des moyens de régulation du fonctionnement de moyens de commande de débits et un calculateur programmable.

13. Installation selon la revendication 11 ou 12, caractérisée en ce qu'elle comporte un automate programmable.

## Patentansprüche

1. Verfahren zur Herstellung einer Wärmebehandlungsatmosphäre durch katalytische Reaktion zwischen einem ersten, Sauerstoff enthaltenden Gasgemisch (2/3) und einem zweiten, einen Kohlenwasserstoff enthaltenden Gasgemisch (4) in einem katalytischen Reaktor (16) zur Zuführung der Atmosphäre zu einem Verwendungsort mit mindestens einer Verbrauchsstelle (F1, F2, F3, 25), bei dem man:
a) den Druck der am Ausgang des Reaktors erhaltenen Wärmebehandlungsatmosphäre kontinuierlich mißt (12);
b) die in Schritt a) vorgenommene Druckmessung mit einem Solldruck P_{c}, der am Ausgang des Reaktors in Abhängigkeit von dem Maximaldurchsatz, den der betrachtete Ort benötigt, und dem das Netzwerk kennzeichnenden Druckverlust bestimmt wird, vergleicht;
c) gegebenenfalls entsprechend dem Ergebnis des in Schritt b) vorgenommenen Vergleichs auf den jeweiligen Durchsatz des am Eingang des katalytischen Reaktors ankommenden ersten und/oder zweiten Gasgemischs so rückwirkt, daß der Druck der Wärmebehandlungsatmosphäre am Ausgang des Reaktors wieder auf den Sollwert P_{c} gebracht wird, falls nötig.

2. Verfahren nach Anspruch 1, dadurch gekennzeichnet, daß man im Reaktor einen Katalysator auf Edelmetallbasis einsetzt und die Reaktion bei einer Temperatur zwischen 400°C und 900°C durchführt.

3. Verfahren nach Anspruch 1, dadurch gekennzeichnet, daß man im Reaktor einen Katalysator auf Nichtedelmetallbasis einsetzt und die Reaktion bei einer Temperatur zwischen 800°C und 1200°C durchführt.

4. Verfahren nach Anspruch 2 oder 3, dadurch gekennzeichnet, daß man die Reaktorheiztemperatur auf den Durchsatz der produzierten Atmosphäre abstimmt.

5. Verfahren nach einem der Ansprüche 1 bis 4, dadurch gekennzeichnet, daß man als erstes Gasgemisch durch Luftzerlegung mittels Membranen oder durch Adsorption hergestellten unreinen Stickstoff mit einer Sauerstoff-Restkonzentration größer gleich 0,5% einsetzt.

6. Verfahren nach Anspruch 5, dadurch gekennzeichnet, daß die Sauerstoff-Restkonzentration zwischen 2 und 7% liegt.

7. Verfahren nach einem der Ansprüche 1 bis 4, dadurch gekennzeichnet, daß man als erstes Gasgemisch ein Gemisch aus Luft und kryogen erzeugtem Stickstoff einsetzt.

8. Verfahren nach einem der vorhergehenden Ansprüche, dadurch gekennzeichnet, daß man einen Wärmeaustausch zwischen den beiden folgenden Gasmedien durchführt:
- der Wärmebehandlungsatmosphäre zwischen ihrem Austritt aus dem katalytischen Reaktor und ihrer Ankunft an einem Verwendungsort;
- dem ersten, Sauerstoff enthaltenden Gasgemisch vor seinem Eintritt in den katalytischen Reaktor.

9. Regelungsverfahren für ein Verfahren zur Herstellung einer Wärmebehandlungsatmosphäre, bei welchem man durch Umsetzung eines ersten, Sauerstoff enthaltenden Gasgemischs mit einem zweiten, einen Kohlenwasserstoff enthaltenden Gasgemisch in einem katalytischen Reaktor am Ausgang des Reaktors die Wärmebehandlungsatmosphäre zur Zuführung zu einem Verwendungsort mit mindestens einer Verbrauchsstelle erhält, bei dem man:
a) den Druck P der am Ausgang des katalytischen Reaktors erhaltenen Wärmebehandlungsatmosphäre kontinuierlich mißt;
b) die in Schritt a) vorgenommene Messung von Druck P mit einem Solldruck P_{c}, der am Ausgang des Reaktors in Abhängigkeit von dem Maximaldurchsatz, den der betrachtete Ort benötigt, und dem das Netzwerk kennzeichnenden Druckverlust bestimmt wird, vergleicht;
c) gegebenenfalls entsprechend dem Ergebnis des in Schritt b) vorgenommenen Vergleichs auf den jeweiligen Durchsatz des am Eingang des katalytischen Reaktors ankommenden ersten und/oder zweiten Gasgemischs so rückwirkt, daß der Druck P wieder auf den Sollwert P_{c} gebracht wird, falls nötig.

10. Regelungsverfahren nach Anspruch 9, dadurch gekennzeichnet, daß man den Druck P auf den Sollwert P_{c} bringt, indem man den Gesamtdurchsatz der produzierten Wärmebehandlungsatmosphäre verändert, wobei man den Unterschied zwischen P und P_{c} in einen Gesamtatmosphärendurchsatz-Sollwert Q_{c} umwandelt, und daß man ausgehend von den Solldaten für den Gesamtdurchsatz Q_{c} und die geforderte Zusammensetzung der Atmosphäre:
- den Sollwert Q_{N2-O2} für den Durchsatz des ersten, Sauerstoff enthaltenden Gasgemischs berechnet und
- auf der Grundlage des Sollwerts Q_{N2-O2} den Sollwert Q_{CxHy} für den Durchsatz des zweiten, den Kohlenwasserstoff enthaltenden Gasgemischs berechnet.

11. Vorrichtung zur Herstellung einer Wärmebehandlungsatmosphäre mit:
- einer Quelle (2/3) eines ersten, Sauerstoff enthaltenden Gasgemischs,
- einer Quelle (4) eines zweiten, einen Kohlenwasserstoff enthaltenden Gasgemischs und
- einem katalytischen Reaktor (16) zur Desoxygenierung eines Gases, der darauf ausgelegt ist, an seinem Ausgang die durch Reaktion zwischen dem ersten Gasgemisch und dem zweiten Gasgemisch im Inneren des Reaktors gebildete Wärmebehandlungsatmosphäre zu liefern,
dadurch gekennzeichnet, daß sie folgendes enthält:
a) erste Mittel (12) zur kontinuierlichen Messung des Drucks der Atmosphäre am Ausgang des Reaktors;
b) zweite Mittel (1), mit denen das Ergebnis der in Schritt a) vorgenommenen Druckmessung mit einem Solldruck P_{c}, der am Ausgang des Reaktors in Abhängigkeit von dem Maximaldurchsatz, den der betrachtete Ort benötigt, und dem das Netzwerk kennzeichnenden Druckverlust bestimmt wird, verglichen werden kann;
c) dritte Mittel (1), mit denen gegebenenfalls entsprechend dem Ergebnis des in Schritt b) vorgenommenen Vergleichs der jeweilige Durchsatz des am katalytischen Reaktor ankommenden ersten und/oder zweiten Gasgemischs geändert werden kann, um den Druck wieder auf den Sollwert P_{c} zu bringen.

12. Vorrichtung nach Anspruch 11, dadurch gekennzeichnet, daß die zweiten und dritten Mittel in einer Datenverarbeitungseinheit zusammengefaßt sind, die Mittel zur Regelung der Funktion der Durchsatzregler und einen programmierbaren Rechner enthält.

13. Vorrichtung nach Anspruch 11 oder 12, dadurch gekennzeichnet, daß sie eine programmierbare Automatik enthält.

## Claims

1. Process for the preparation of a heat treatment atmosphere by catalytic reaction between a first gaseous mixture (2/3) containing oxygen and a second gaseous mixture (4) containing a hydrocarbon in a catalytic reactor (16) with a view to supplying the said atmosphere to a user site comprising at least one user station (F1, F2, F3, 25), whereby:
a) the pressure of the heat treatment atmosphere obtained is constantly measured (12) at the reactor outlet;
b) the pressure measurement taken during step a) is compared with a set point pressure P_{c} determined at the reactor outlet as a function of the maximum flow rate that the site in question requires and as a function of the pressure drop that characterizes the network;
c) feedback action is exerted, as necessary, depending on the result of the comparison performed during step b), on the respective flow rates of the first gaseous mixture and/or the second gaseous mixture arriving at the inlet of the catalytic reactor, so as if necessary to return the pressure of the heat treatment atmosphere at the reactor outlet to the set point level P_{c}.

2. Process according to Claim 1, characterized in that a catalyst based on a precious metal is used in the reactor and in that the reaction is carried out at a temperature of between 400°C and 900°C.

3. Method according to Claim 1, characterized in that a catalyst based on a non-precious metal is employed in the reactor and in that the reaction is carried out at a temperature of between 800°C and 1200°C.

4. Process according to Claim 2 or 3, characterized in that the temperature to which the reactor is heated is governed by the flow rate of atmosphere produced.

5. Process according to one of Claims 1 to 4, characterized in that the said first gaseous mixture is an impure nitrogen produced by the separation of air by a membrane or by adsorption, the residual oxygen concentration of which is greater than or equal to 0.5%.

6. Process according to Claim 5, characterized in that the residual oxygen concentration is between 2 and 7%.

7. Process according to one of Claims 1 to 4, characterized in that the said first gaseous mixture is a mixture of air and of nitrogen of cryogenic origin.

8. Process according to one of the preceding claims, characterized in that heat exchange is carried out between the following two gaseous media:
- the said heat treatment atmosphere between its exit from the catalytic reactor and its arrival at a user station;
- the said first gaseous mixture containing oxygen, before it enters the catalytic reactor.

9. Method for regulating a process for the preparation of a heat treatment atmosphere, during which process a first gaseous mixture containing oxygen and a second gaseous mixture containing a hydrocarbon are reacted in a catalytic reactor in order to obtain the said heat treatment atmosphere at the outlet of the reactor with a view to supplying the said atmosphere to a user site comprising at least one user station, whereby:
a) the pressure P of the said heat treatment atmosphere obtained is constantly measured at the catalytic reactor outlet;
b) the pressure measurement P taken during step a) is compared with a set point pressure P_{c} determined at the reactor outlet as a function of the maximum flow rate that the site in question requires and as a function of the pressure drop that characterizes the network;
c) feedback action is exerted, as necessary, depending on the result of the comparison performed during step b), on the respective flow rates of the first gaseous mixture and/or the second gaseous mixture arriving at the inlet of the catalytic reactor, so as if necessary to return the pressure P to the set point pressure P_{c}.

10. Method of regulation according to Claim 9, characterized in that the pressure P is returned to the level of the set point value P_{c} by modifying the total flow rate of heat treatment atmosphere produced, the difference between P and P_{c} being translated into a total flow rate set point Q_{c} for the atmosphere and in that, using data regarding the total flow rate set point Q_{c} and regarding the required composition of the atmosphere, the following steps are carried out:
- the set point Q_{N2-02} for the flow rate of the first gaseous mixture containing oxygen is calculated;
- on the basis of the set point Q_{N2-O2}, the set point Q_{CxHy} for the flow rate of the second gaseous mixture containing the hydrocarbon is calculated.

11. Installation for the preparation of a heat treatment atmosphere comprising:
- a source (2/3) of a first gaseous mixture containing oxygen;
- a source (4) of a second gaseous mixture containing a hydrocarbon;
- a catalytic reactor (16) for the deoxygenation of a gas, capable of producing, at its outlet, the said heat treatment atmosphere as a result of the reaction within the reactor between the first gaseous mixture and the second gaseous mixture,
characterized in that it comprises:
a) first means (12) for constantly measuring the pressure of the atmosphere at the reactor outlet;
b) second means (1) allowing the result of the measurement performed during step a) to be compared with a set point pressure P_{c} determined at the reactor outlet as a function of the maximum flow rate that the site in question requires and as a function of the pressure drop that characterizes the network;
c) third means (1) making it possible, as necessary, depending on the result of the comparison performed during step b) to modify the respective flow rates of the first gaseous mixture and/or the second gaseous mixture arriving at the catalytic reactor, so as to return the said pressure to the level of the set point pressure P_{c}.

12. Installation according to Claim 11, characterized in that the second and third means are combined into a data processing unit comprising means for regulating the operation of means for controlling flow rates, and a programmable computer.

13. Installation according to Claim 11 or 12, characterized in that it comprises a programmable automatic controller.
